# EUROPEAN PATENT APPLICATION

(11) **EP 4 197 746 A1**
(43) Date of publication of application: **21.06.2023**
(21) Application number: 21215658.2
(22) Date of filing: 17.12.2021
(51) Int. Cl.: B29C 64/176, B29C 64/106, B29C 64/118, B29C 64/182, B29C 64/227, B29C 64/245, B33Y 10/00, B33Y 30/00

(54) **A SYSTEM AND METHOD FOR MANUFACTURING ONE OR MORE THREE-DIMENSIONAL STRUCTURES**

(71) Applicant: VITO NV, 2400 Mol (BE); BASF SE, 67056 Ludwigshafen am Rhein (DE)
(72) Inventor: GEOERG, Daniel, 67056 Ludwigshafen (DE); HARTMANN, Dominik, 67056 Ludwigshafen (DE); BORNINKHOF, Fred, 67056 Ludwigshafen (DE); MICHIELSEN, Bart, B-2400 Mol (BE); LEFEVERE, Jasper, B-2400 Mol (BE)
(74) Representative: V.O.

(57) **Abstract**

The invention relates to an additive manufacturing system and a method for manufacturing one or more three-dimensional structures. At least one deposition unit with one or more nozzles is arranged for dispensing a build material through an opening area thereof on a print surface. A controller is provided which is configured to operate the system for deposition of filaments of a build material paste on the print surface in an interconnected arrangement in a plurality of stacked layers in order to form the one or more three-dimensional structures. An actuation unit is arranged in order to have access to the at least one deposition unit, wherein the actuation unit is configured to hold the print surface. The actuation unit is configured to move the print surface at the at least one deposition unit during deposition of the filaments by said deposition unit.

## Description

### FIELD OF THE INVENTION

The invention relates to a system and method for manufacturing one or more three-dimensional structures. Furthermore, the invention relates to a use of the system for manufacturing one or more three-dimensional structures. Additionally, the invention relates to an actuation unit for use in an additive manufacturing system. Also, the invention relates to a computer implemented method.

### BACKGROUND TO THE INVENTION

Additive manufacturing is currently widely used and various techniques exist. Additive manufacturing is a suitable technique for building a structure layer-by-layer and the manufactured three-dimensional structure can be employed in various applications.

In deposition 3D printing techniques, a certain arrangement of filaments can be obtained by relative movement of the nozzle with respect to a print bed of a print station during deposition. During the material extrusion, filaments are extruded from a nozzle and positioned relative to one another according to a predetermined pattern providing the desired properties of the manufactured three dimensional structure. The lay down pattern on the print bed of the print station defines has a major impact on the shape and properties of the printed structure.

There is a need for improving the printing process of three-dimensional structures manufactured by additive manufacturing. Often, the printing process is rather slow, making it difficult to employ for printing various or large numbers of objects requiring a higher output while avoiding high costs involved. It is desired to obtain a system capable of increasing the output of printed 3D structures in an efficient manner. Additionally or alternatively, there is a strong desire to obtain more flexibility in the additive manufacturing process, whilst preferably providing a robust system.

### SUMMARY OF THE INVENTION

It is an object of the invention to provide for a method and a system that obviates at least one of the above mentioned drawbacks.

Additionally or alternatively, it is an object of the invention to improve the additive manufacturing process for three-dimensional structures.

Additionally or alternatively, it is an object of the invention to increase the efficiency of an extrusion based additive manufacturing process for fabricating three-dimensional structures.

Additionally or alternatively, it is an object of the invention to provide for more flexibility in additive manufacturing.

Additionally or alternatively, it is an object of the invention to enable more complex additive manufacturing processes.

Thereto, the invention provides for an additive manufacturing system for manufacturing one or more three-dimensional structures, the system comprising: at least one deposition unit including one or more nozzles arranged for dispensing a build material through an opening area thereof on a print surface; a controller configured to operate the system for deposition of filaments of a build material paste on the print surface in an interconnected arrangement in a plurality of stacked layers in order to form the one or more three-dimensional structures; and an actuation unit arranged to have access to the at least one deposition unit, wherein the actuation unit is configured to hold the print surface; and wherein the actuation unit is configured to move the print surface at the at least one deposition unit during deposition of the filaments by said deposition unit.

A highly productive printing process can be obtained by means of the system according to the disclosure. The system may provide for a high efficiency for manufacturing 3D structures. Furthermore, each deposition unit may require significantly less space, as it does not have a dedicated printing surface. Moreover, the subunits of the system required for providing the build material to the nozzle can be made more compact. In this way, a highly effective compact system can be obtained.

Additionally, the system according to the invention provides for an improved flexibility in manufacturing 3D structures. Advantageously, complex printing processes may be carried out by means of a cost-effective system.

Moreover, a more robust printing process can be obtained. For example, if a failure and/or interruption occurs at one of the deposition units during the printing process, the whole printing process does not need to be terminated. Instead, the actuation unit can easily and efficiently move the print surface to another deposition unit without requiring additional actions such as opening the print chamber, gripping the print surface, moving the print surface to a new print chamber, and securing and aligning the print surface back into a new print chamber, and determining which part of the printing process is to be continued before continuing the printing process. For example, a failure or interruption may occur at the deposition unit when one or more components of the deposition unit are going to fail (cf. predictive indication) or have failed. In some cases, a maintenance and/or replacement is required (e.g. build material needs to be replenished, reservoir needs to be replaced/refilled, etc.) at the deposition unit and the print process can be easily continued on another deposition unit. The actuation unit can easily move the print surface to the other deposition unit, without requiring additional tasks such as gripping a carrier, which may result in detrimental vibrations which can damage the structure already printed on the print surface.

Advantageously, larger nozzles and/or heavier arrangements coupled to the nozzles may be employed. It can be more difficult to perform movement of larger/heavier nozzle arrangements as a result of larger mass and resulting inertia. Furthermore, additionally or alternatively, the deposition unit may include a printing material preparation process equipment. As a result, it can become easier to integrate the printer into preceding manufacturing steps. Advantageously, this can provide the possibility to use fixed pipes instead of reservoirs or hoses.

Optionally, the actuation unit is a robotic unit. The robotic unit may include a multi-purpose robotic manipulator.

The actuation unit may be a robot arm which is configured to perform the movement of the print surface during printing of the 3D structure. Additional tasks, such as for example plate handling (e.g. putting away the plate when finished printing, and taking a new plate), may also be carried out by the robot arm.

The actuation unit may be configured to handle different types of printing surfaces, for example having different shapes and/or dimensions. Different printing substrates/plates may be employed. The printing surface may be picked up by the actuation unit, and subsequently moved during the printing depending on the properties of the 3D structure being printed. The actuation unit may be configured to handle the printing surface for performing one or more pre-processing steps (e.g. cleaning of printing surface) and/or one or more post-processing steps (e.g. cleaning, inspection, treatment, plate handling, transportation to a treatment unit, etc.). For example, after printing at the at least one deposition unit, the plate can be directly moved away from said at least one deposition unit.

The system provides for an improved ability for integration of the additive manufacturing process into a larger manufacturing process. For example, the printing process performed by means of the system according to the disclosure can be more easily integrated into an integrated manufacturing line.

It will be appreciated that the system includes at least one actuation unit. Optionally, the system includes multiple actuation units. In some examples, each of the multiple actuation units are arranged to have access to the at least one deposition unit. In some examples, each of the actuation unit is configured to hold one or more print surfaces. The multiple actuation units can be configured to move their respective print surfaces at multiple deposition units of the system during deposition of the filaments by the respective deposition units.

Optionally, the multiple actuation units are arranged to have access to at least one common deposition unit. For example, after completion of a print task at said common deposition unit, another print surface may be provided directly by another actuation unit. In this way, it is possible to have a more continuous printing process. The interruption of the printing process can be limited or even avoided.

Optionally, the one or more nozzles of the at least one deposition unit are arranged to remain stationary during the deposition of the filaments.

The movement required for printing the 3D structure during deposition of build material filaments is performed by means of the actuation unit holding the print surface. Since, the actuation unit already holds the print surface during printing, shocks and vibrations due to handling of the print surface can be prevented, whilst providing a more efficient process. The print surface with printed 3D structures can be directly moved and optionally further processed.

Optionally, the at least one deposition unit of the system does not have an integrated printing surface. Furthermore, the at least one deposition unit does not require a dedicated movement arrangement for providing movement during printing. The printing nozzle can remain stationary during printing.

Optionally, the at least one deposition unit and the one or more actuation units of the system are distributed. The one or more actuation units may be moveable with respect to each other, and with respect to the at least one deposition unit. In some examples, the deposition units are fixed and the one or more actuation units are moveably arranged.

Optionally, the actuation unit and the at least one deposition unit are physically connectable.

Optionally, the system provides a base plate through which the actuation unit can be connected to the at least one deposition unit. Such a base plate may provide a physical connection allowing the at least one deposition unit and the actuation unit to be aligned to each other. A base plate may provide for a rigid connection. Additionally or alternatively, the actuation unit may have one or more sensors usable for aligning the actuation unit with the at least one deposition unit. During printing of the 3D structures on the printing surface held by the actuation unit, any misalignment between the actuation unit and the at least one deposition unit can be minimized.

The actuation unit and the at least one deposition unit may be physically connectable in different ways. Such a physical connection may be configured to reduce or minimize misalignment between the actuation unit and the deposition unit.

The actuation unit can be used with multiple deposition units. The actuation unit (e.g. moveable robotic unit) may also be configured to move the printing surface to other subunits, such as for instance processing units. Various processing units may be used, for instance a curing unit, a cleaning unit, a drying unit, a treatment unit, an inspection unit, a cutting unit, a separation unit, a conditioning unit, etc. In some examples, the subunits and/or processing units are submodules of the system. The subunits and/or processing units may be independently accessible by the actuation unit. This provides for a significant flexibility in manufacturing of 3D structures. Furthermore, an adaptive manufacturing process can be obtained, wherein on-the-fly decisions can be made for further processing of the fully or partly printed 3D structure.

Optionally, the system comprises a plurality of deposition units, wherein each of the plurality of the deposition units is accessible by the actuation unit.

Multiple three-dimensional structures can be printed at least partially simultaneously using multiple deposition units.

The system may have a plurality of deposition units which can couple to the actuation unit. Some or all deposition units may have the same characteristics. However, in some examples, some or all deposition units are different and have different characteristics. For example, some deposition units may use different build materials, some may employ different process parameters, some may have different print heads (e.g. different nozzle shape, different nozzle dimensions, etc.).

The system may include a controller which is configured to control the actuation unit and its interaction with different deposition units of the system. For example, when a deposition unit is ready printing the actuation unit can remove the carrier and/or the three-dimensional printed structures, and provide a new carrier for a next printing task. Furthermore, the system controller can be arranged to control when the deposition units are to start the printing process, perform actions when the reservoirs containing the build material are (almost) empty, etc. Optionally, the system may include station controllers which can be configured to control the local deposition units. Alternatively, the local deposition units may be controlled by the system controller directly. A combination of such control architectures is also envisaged.

In some examples, the one or more deposition units may have fixed piping for providing build material to the one or more nozzles thereof, instead of a reservoir. This may be a significantly more simple arrangement, making it possible to have a more cost-effective design.

The system can enable improved parallel printing at the plurality of deposition units. The printing operations can be better tuned/adapted to each other, provided by the individual control of the deposition units and/or the arrangement of the build material reservoirs.

The actuation unit can be configured to determine a destination for the printing surface (e.g. carrier) carrying the printed three-dimensional structure(s) removed from the deposition unit. In some examples, the actuation unit may return the printing surface to its original position in the empty state, e.g. on a rack or collection system. According to other examples the actuation unit does not necessarily have to be put back the printing surface on the same destination (e.g. same rack of a collection system), but may take care to transport the printing surface towards a post-processing unit. This can, for example, depend on the optional post processing steps for the printed three-dimensional structures.

In the system of this invention several deposition units or printers may be integrated. The deposition units (e.g. 3D printers or printing stations) may be the same or different. In particular, several deposition units may be provided for extruding a build material from one or more extrusion nozzles, so-called extrusion or micro-extrusion printing. The system may further include an automatic actuation unit for applying, removing and/or replacing printing surfaces (e.g. plate, tray or substrate) in the deposition units.

Each deposition unit can have one or more access openings. In some examples, the deposition units are arranged next to each other in a chamber. The actuation unit may be arranged in the chamber. Additionally or alternatively, one or more individual deposition units may have a housing which can be accessed by the actuation unit.

Optionally, the system comprises a first deposition unit and a second deposition unit, wherein the first and second deposition units are different; and wherein the actuation unit is configured to manipulate the print surface so as to perform a first part of a printing process at the first deposition unit, and to manipulate the print surface so as to perform a second part of the printing process at the second deposition unit.

Optionally, the first deposition unit is configured to print a first build material, and the second deposition unit is configured to print a second build material, the first and second build materials being different. Advantageously, a multi-material 3D structure can be efficiently manufactured by using at least the first and second deposition units.

Optionally, the first deposition unit comprises at least a first nozzle, and the second deposition unit comprises at least a second nozzle, wherein the first and second nozzles are different with respect to each other. For example, the first and second nozzles may have different arrangements, dimensions, shapes, configurations, etc. Additionally or alternatively, the first and second nozzles may be operated using different process parameters (e.g. pressure, temperature, speed of deposition of build material, etc.).

Optionally, the first deposition unit is configured to operate with a first set of process parameters, and the second deposition unit is configured to operate with a second set of process parameters, wherein the first and second process parameters are at least partially different. In some examples, the first deposition unit is configured to print the build material at a first temperature in a first range, and the second deposition unit is configured to print the build material at a second temperature in a second range, wherein the first and second temperatures and/or the first and second temperature ranges are different. In this way, a faster printing process maybe required, and detrimental effects due to transient temperature effects may be prevented.

Optionally, the first and second deposition units have a different number of nozzles and/or nozzle configurations. For example, the first deposition unit may have two operating nozzles during the printing process, and the second deposition unit may have four operating nozzles during the printing process. The arrangement of the nozzles may also be different. For example, the different deposition units could also vary in their nozzle diameter and/or nozzle shape. In this way, solid support structures may be printed even faster with the same or a different material than the inner functional structures. For example, when a catalyst 3D structure is printed, an inner portion of the structure may have a high surface area needed for catalysis. An outer portion of the structure (e.g. thick outer walls) may be provided merely for the purpose of strength (cf. support for improving structural integrity). Thus, some parts of the 3D structure being printed may require different properties for which a particular deposition unit may be selected. In this way, depending on the requirements of the 3D structure (e.g. related to the use or application of said structure), the deposition unit can be selected.

Advantageously, the actuation unit enables advanced processing of the structure during the printing process. For instance, the printing process at a deposition unit may be interrupted for processing at a processing unit, prior to proceeding the printing at the same or different deposition unit. For example, the processing unit may be a laser cutting unit, a drilling unit, a UV curing unit, a cleaning unit, etc. In this way, the quality of the 3D printed structure can be significantly improved in an efficient way. The actuation unit allows easy transport of the printing surface to the processing units.

Optionally, the plurality of deposition units are arranged around the actuation unit.

In some examples, all deposition units are accessible by the actuation unit. For this purpose the actuation unit can be at least partially surrounded by the deposition units (e.g. arranged centrally). The actuation unit can be arranged to install and place empty printing surfaces in deposition units, and to remove the printing surfaces with three-dimensional structures printed thereon from the deposition units. The printing surfaces with three-dimensional structures printed thereon can be removed from the deposition unit and placed on a cart or any other collecting and/or transport device for removal. A positioning structure may be arranged to enable correct positioning of the printing surface in the collection system (e.g. cart, rack, etc.). If the handling by the actuation unit is not performed correctly, for instance due to bad positioning, the edge of the cart may be bumped unintentionally, which can disrupt the three-dimensional structures on previously placed printing surfaces.

If printing of the three-dimensional structures on the printing surface has been completed (e.g. print job completed or printing surface/plate being full), the actuation unit can be operated to automatically remove the printing surface with the printed three-dimensional structures and to place it in a receiving unit, such as a cart or holder e.g. for transportation. Each deposition unit can be controlled individually. In some examples, different materials can be printed per deposition unit. Furthermore, it is possible to print different shapes per deposition unit, or structures having different dimensions or different geometries. Also different quantities can be printed per deposition unit. The system can be configured to determine whether a correct number of three-dimension structures is printed on the printing surface and then the printing surface with printed three-dimensional structures (e.g. objects, parts, pieces, etc.) can be removed by the actuation unit when the print job has been completed.

The system can be configured to control the actuation unit taking into account printing operations in the plurality of the deposition units. The (sub)tasks for printing the three-dimensional structure(s) can be sent individually or directly to the actuation unit and the deposition unit and the being selected for performing the printing of said three-dimensional structure(s). The system can be configured to enable an individual control for each deposition unit. This can be adjusted separately by an operator, if necessary, for example by means of a terminal. The individual control for the deposition units can for instance be arranged on an outside portion of the deposition unit or the system (e.g. outside the printer housing and/or system housing). In some examples, each deposition unit has an external terminal or interface for enabling individual control over the deposition unit. The printing process can therefore be easily adjusted for each of the deposition units. In some examples, the actuation unit can be communicatively coupled to the selected at least one deposition unit. In this way, the operations of the selected deposition unit and the actuation unit can be synchronized.

Optionally, each of the plurality of deposition units have a substantially same distance from the actuation unit.

A plurality of deposition units may be arranged around the actuation unit in a structured manner. For example, the plurality of deposition units may be arranged in a square, circle, etc. around the actuation unit. In some examples, each deposition unit of the plurality of deposition units has a substantially same distance with respect to the actuation unit.

Optionally, a plurality of deposition units are communicatively coupled to the actuation unit.

Optionally, the actuation unit is movably arranged between the plurality of deposition units.

In some examples, the actuation unit is not permanently connected to the at least one deposition unit. The actuation unit may be detachably connectable to the at least one deposition unit.

Optionally, the at least one deposition unit is free of a dedicated movable printing surface arranged in said at least one deposition unit.

Advantageously, the at least one deposition unit of the system is not provided with a dedicated printing surface or printing platform, such as for instance a stationary printing platform or a moveable XYZ platform. Instead, the printing surface is provided and held by the actuation unit. The movement of the printing surface is achieved by means of the actuation unit (e.g. robotic unit).

Optionally, the print surface is a detachable carrier. The detachable carrier can provide flexibility in post-processing of the 3D printed structures (e.g. after-treatment).

Optionally, the at least one deposition unit includes a reservoir containing build material usable for deposition through the opening area of the one or more nozzles and/or a material providing unit configured to prepare and/or provide said build material, and wherein the reservoir and/or the material providing unit are arranged at the one or more nozzles of said at least one deposition unit.

The build material providing unit may be a material preparation unit or a mixing unit. A build material or a build material providing unit may be heavy. Arranging such units at the nozzle or print head of the deposition unit, or coupled thereto, may result in difficulties in movement of the nozzle. As a result, large and costly actuators may be needed. Advantageously, the print surface is moved by the actuation unit, resulting in an improved design of the additive manufacturing system. A more cost-effective arrangement may be obtained. Additionally, the additive manufacturing system may be more robust, since replacement of one or more components (e.g. tubing) due to movement action of the print head of nozzles may not be necessary. As a result, the deposition unit may require less maintenance. The operating costs can also be reduced.

Optionally, the at least one deposition unit comprises a nozzle which is directly coupled to one or more build material preparation units.

Optionally, the at least one deposition unit comprises a nozzle which is directly coupled to a build material reservoir.

Optionally, the actuation unit and the at least one deposition unit are physically separated from each other.

Optionally, the actuation unit is detachably connectable to the at least one deposition unit.

Optionally, the actuation unit is a robotic unit configured to perform one or more additional processing steps, the additional processing including at least one of: plate handling, inspection, cleaning or repositioning.

The actuation unit can be configured to perform other tasks than the actual printing movements. In some examples, the actuation unit may be configured to perform movements of the print surface for cleaning said print surface. For instance, the actuation unit may move the print surface over a cleaning member (e.g. brush) in order to clean the surface of the printing surface. Additionally or alternatively, the actuation unit may be configured to perform quality control, interact with other units, perform active or passive cleaning actions, etc.

Optionally, the actuation unit is configured to move the printing surface towards a sensory unit which is configured to inspect and/or evaluate a printing quality of the 3D printed structure on the printing surface. The sensory unit may for instance comprise a camera. The actuation unit may move the printing surface accordingly in the detection area (e.g. field of view) of the sensory unit such that the 3D printed structure on the printing surface held by the actuation unit can be inspected by said sensory unit (e.g. camera).

Optionally, the system further includes a treatment station, wherein the actuation unit is configured to directly transport the printing surface with printed one or more three-dimensional structures to the treatment station.

In addition to providing movement of the print surface during the printing process, the actuation unit can also be configured to move the printing surface during pre-processing (e.g. cleaning of the print surface) or post-processing (e.g. inspection, cleaning, print surface handling, repositioning, transportation, separation of parts from the printed structure, treatment, curing, drying, replacement of the print surface, etc.). It is also possible that the actuation unit facilitates intermediate steps between parts of the printing process. In some examples, the actuation unit is configured to feed an empty print surface to a cleaning station. In some examples, the actuation unit is configured to perform movements needed for cleaning. In some examples, the actuation unit can provide a partly or fully loaded print surface to a (quality) inspection station. Various additional processing steps can be performed by means of the actuation unit. The actuation unit may have additional devices (e.g. sensors, actuators, etc.) for performing additional tasks.

Optionally, the actuation unit is configured to hold multiple printing surfaces at a same time for simultaneous printing at multiple different deposition units.

The efficiency of the printing process can be improved, as parallel printing of structures can be obtained in an efficient and effective way. Furthermore, a more robust parallel printing process can be obtained, a same actuation unit is used for multiple print surfaces.

Optionally, the actuation unit is configured to simultaneously handle multiple printing surfaces. Optionally, the actuation unit is configured to perform synchronous movement of the multiple printing surfaces. In some examples, each printing surface of the multiple printing surfaces may be positioned at a different deposition unit. In this way, multiple deposition units can be used simultaneously for parallel printing of the 3D structure.

The actuation unit may comprise a holding unit configured to be equipped with two or more printing surfaces for allowing synchronous movement of said two or more printing surfaces. This allows for robust parallel printing of the structure, for example using multiple deposition units at the same time. By employing such configuration, it can be better guaranteed that a same printing movement has been carried out by the two or more printing surfaces.

Optionally, the actuation unit is configured to carry multiple printing surfaces substantially horizontally or next to each other. Additionally or alternatively, the actuation unit may be configured to carry multiple printing surfaces substantially vertically or on top of each other. A combination of such arrangements is also possible, such that a matrix (two-dimensional array) of printing surfaces can be obtained. In such an example, the printing surfaces are on top of each other and next to each other, for example forming a 2x2 matrix, 3x3 matrix, 2x3 matrix, 3x2 matrix, etc. The printing surfaces may be distanced from each other. The actuation unit may for example be a robotic unit comprising a robot arm configured to hold multiple printing surfaces. A cost-effective design can be obtained for parallel additive manufacturing of 3D structures.

Optionally, the system comprises a deposition unit of a first type and a deposition unit of a second type, wherein the first type is associated to a first 3D printing technique, and the second type is associated to a second 3D printing technique. The first and second 3D printing techniques may be different. In this way, a 3D printing structure can be manufactured employing different printing techniques. The printing surface can be easily moved from the deposition unit of the first type to the deposition unit of the second type, and/or vice versa. In this way, advanced additive manufacturing processes can be carried out in an efficient and robust manner.

In some examples, the build material is a paste. The paste can be extruded through the nozzle (cf. micro-extrusion process). However, other printing techniques may also be used, such as for instance fused deposition modelling (FDM).

According to an aspect, the invention relates to a method for manufacturing one or more three-dimensional structures, the method including: dispensing, by means of at least one deposition unit with one or more nozzles, a build material on a print surface; operating, by means of a controller, the system for deposition of filaments of a build material paste on the print surface in an interconnected arrangement in a plurality of stacked layers in order to form the one or more three-dimensional structures; and providing an actuation unit arranged to have access to the at least one deposition unit, the actuation unit holding the print surface, and wherein the actuation unit moves the print surface at the at least one deposition unit during deposition of the filaments by said deposition unit.

The system can enable an additive manufacturing process for three-dimensional structures with an improved efficiency and versatility. The deposition units may be arranged as printing stations.

Moreover, also the printing quality can be significantly enhanced since the actuation unit can be used for multiple deposition units, instead of employing a dedicated actuator at each deposition unit for providing the movement during printing. A better control over the filaments interspacing or filament-to-filament distance can be obtained for each deposition unit. The system can have a number of integrated functionalities.

Optionally, the a first deposition unit is provided which his configured to print a first build material, and a second deposition unit is provided which is configured to print a second build material, wherein the first and second build material are different. The actuation unit may be configured to manipulate the print surface so as to perform a first part of the printing process at the first deposition unit, and to manipulate the print surface so as to perform a second part of the printing process at the second deposition unit, such as to manufacture a multi-material three-dimensional structure.

Additionally or alternatively, the first and second deposition units have one or more nozzles with different physical properties (e.g. dimensions, shapes, etc.).

Additionally or alternatively, the first and second deposition units operate using different process parameters.

An improved continuity in the printing operations of the plurality of deposition units (e.g. distinct printing stations) may be obtained. The deposition units can continue to operate while adjustments are performed to one or more other deposition units, e.g. when replacing or refilling a build material paste reservoir, performing maintenance tasks, performing cleaning tasks, adjusting control parameters of a printing station, etc. Additionally or alternatively, operations of individual deposition units can be halted while other deposition units continue actively printing and/or remain active.

The operation of the at least one deposition unit and the actuation unit may be synchronized. In this way, the movement of the printing surface carried out by the actuation unit, and the printing (e.g. deposition) of build material can be synchronized, allowing to manufacture a desired 3D structure. Various control mechanisms may be implemented in the system. In some examples, both the at least one deposition unit and the actuation unit may be connected to a controller. The controller may be a centralized controller. However, additionally or alternatively, or one or more distributed controllers may be arranged which are configured to communicate with each other. It is also envisaged that the actuation unit is in communication with a controller that can communicate and/or control the at least one deposition unit. This communication maybe performed directly or indirectly, for instance through a centralized unit.

In some examples, the actuation unit is adapted to be used for multiple purposes. Hence, the actuation unit is not only used for the movement of the printing surface/platform. For example, the actuation unit may be a multi-purpose robotic unit. The actuation unit may be used for movement of the printing surface before, during and after the printing process has occurred at one or more deposition units of the system. The actuation unit may have additional functionalities in addition to moving the printing surface during printing.

According to an aspect, the invention relates to a use of the system for manufacturing one or more three-dimensional structures.

It will be appreciated that the printing surface can be embodied in various ways. The printing surface can for instance be embodied as a plate, a tray, a carrier, a support, a substrate, a holder, or the like. Various configurations, shapes and dimensions are possible. In some examples, the printing surface provides for a flat surface on which three-dimensional structures are printable. However, the printing surface does not need to be flat. Other shapes are also envisaged. For example, the printing surface may have indentations.

Different types of extrusion additive manufacturing arrangements can be employed, for example filament-fed extrusion, screw extrusion or a syringe extrusion. A combination of these technologies is also possible.

In syringe extruders material can be placed into a syringe and the printer can depress the plunger at a controlled rate to extrude filaments through a nozzle. The syringes may for example be filled with a viscous material. In some examples, additionally a heated jacket can be used for heating the syringe to lower the viscosity of the build material paste or to melt the build material (e.g. polymer filaments or granules) in situ before printing. Different types of syringe extrusion systems are possible. A pneumatic pressure can be applied to the plunger. Alternatively, the plunger can be depressed by means of a mechanical displacement for instance achieved by means of an electric motor. Mechanical displacement may allow for more direct control over the volumetric extrusion rate whereas in pneumatic printers, the extrusion rate may additionally depend on an interplay between needle geometry, material viscosity, pneumatic pressure, and obstruction by previously extruded filaments. Other alternative designs are also possible.

In screw extruders a material can be fed into a screw that is surrounded by a close-fitting sleeve, called a barrel. As the screw rotates, material can be forced through the nozzle at the end of the barrel. The rate of material extrusion from the nozzle can depend on the screw rotation speed. Screw extruders can accommodate materials in paste form, however, for example polymer granules can also be used.

Filament-fed extruders may use reels of filaments fed into a heated melting chamber which is attached to a nozzle. The rate of material extrusion from the nozzle can depend on the rate at which the filament is fed off the reels into the melting chamber. Additive manufacturing software may control the extrusion rate based on the desired diameter of extruded filaments and the speed at which the nozzle is moving.

Various systems can be used for performing the extrusion based additive manufacturing method according to the invention.

It will be appreciated that the print surface trajectory, velocity and/or acceleration are also regarded as print parameters which can be controlled by the system/method.

The system and method may be employed for manufacturing a three-dimensional porous structure, wherein the porous structure is formed having interconnected pores.

It will be appreciated that the three-dimensional structure can have filaments spaced apart, or it can be a dense structure with fibers adjacent to each other. When the filaments are adjacent to each other, porosity can be provided by the filaments themselves. When the filaments are spaced from each other, porosity can be mainly provided by the pores formed between the filaments. The filaments themselves can also be porous, e.g. having smaller pores.

According to an aspect, the invention relates to a computer implemented method for printing a three-dimensional structure. The computer implemented method may be configured to operate an additive manufacturing system to perform the steps of the printing method according to the invention. Optionally, the computer implemented method includes the steps of: receiving a model of an object to be manufactured, selecting one or more of the plurality of deposition units for printing the (porous) object, and defining a print path depending on desired characteristics of the (porous) object, using the received model of the object to be manufactured. The print path may define the movement of the print surface held by the actuation unit. The received model may for instance be a 3D representation of the object to be printed.

Optionally, a material extrusion additive manufacturing process is employed in which a material is deposited continuously in a chosen arrangement.

Some embodiments may be implemented, for example, using a machine or tangible computer-readable medium or article which may store an instruction or a set of instructions that, if executed by a machine, may cause the machine to perform a method and/or operations in accordance with the embodiments.

The terms "first", "second", and the like, as used herein do not denote any order, quantity, or importance/relevance, but rather are used to distinguish one element from another. Also, the terms "a" and "an" do not denote a limitation of quantity, but rather denote the presence of at least one of the referenced items.

"Optional" or "optionally" means that the subsequently described event or circumstance may or may not occur, and that the description includes instances where said event or circumstance occurs and instances where it does not.

It will be appreciated that any of the aspects, features and options described in view of the system apply equally to the method and the described actuation unit and/or robotic unit. It will also be clear that any one or more of the above aspects, features and options can be combined.

### BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:
Fig. 1a, 1b show a schematic diagram of a side view of an embodiment of a system;
Fig. 2 shows a schematic diagram of a perspective view of an embodiment of an actuation unit and printing surface;
Fig. 3 shows a schematic diagram of a top view of an embodiment of a system;
Fig. 4 shows a schematic diagram of a side view of an embodiment of a system;
Fig. 5 shows a schematic diagram of a side view of an embodiment of a system;
Fig. 6 shows a schematic diagram of a top view of an embodiment of a system; and
Fig. 7 shows a schematic diagram of a process.

### DETAILED DESCRIPTION

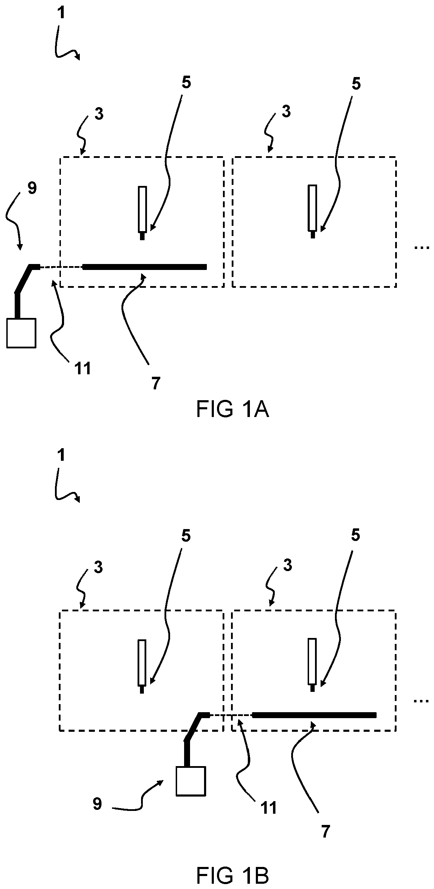

Fig. 1a, 1b show a schematic diagram of a side view of an embodiment of an additive manufacturing system 1. The system 1 is configured to manufacture one or more three-dimensional structures. The system 1 comprises: at least one deposition unit 3 including one or more nozzles 5 arranged for dispensing a build material through an opening area thereof on a print surface 7; a controller configured to operate the system 1 for deposition of filaments of a build material paste on the print surface 7 in an interconnected arrangement in a plurality of stacked layers in order to form the one or more three-dimensional structures; and an actuation unit 9 arranged to have access to the at least one deposition unit 3, wherein the actuation unit 9 is configured to hold the print surface 7; and wherein the actuation unit 9 is configured to move the print surface 7 at the at least one deposition unit 3 during deposition of the filaments by said deposition unit 3. The actuation unit includes a holder 11 configured to hold the print surface 7.

The at least one deposition unit 3 of the system 1 does not have a dedicated printing surface 7 or printing platform 7. The printing surface 7 or printing platform 7 may be provided and moved by the actuation unit 9. The actuation unit may be a moveable robotic unit. In this example, the actuation unit 9 holds the print surface at the first deposition unit 3 (left) in fig. 1a. In fig. 1b, the actuation unit 9 holds the print surface at the second deposition unit 3 (right). This provides in addition to process efficiency significant benefits in 3D printing flexibility. It can become very easy to use structures printed using different deposition units 3 or printing stations.

In some examples, the system 1 comprises different deposition units 3 with varying nozzle diameters and/or nozzle shapes. Additionally or alternatively, the different deposition units 3 may be configured to operate with different process parameters (e.g. temperature, pressure, etc.). Additionally or alternatively, the system may further include one or more processing units which can be accessed by means of the actuation unit 9. For example, the actuation unit 9 may be configured to move the move the print surface 7 to one or more processing units (not shown). For example, the one or more processing units may be have functionalities other than material deposition (e.g. laser cutting, milling, UV curing, treatment, conditioning, etc.). For example, a subtractive unit may be employed for removing at least a portion of the 3D printing structure. For example, the subtractive unit may employ a laser that is configured to shoot outs part of the 3D printed structure on the print surface held by the actuation unit. For instance, a larger 3D printed structure may be printed on the printing surface, which is then subdivided in smaller parts using cutting means (e.g. knife, drill, laser, fluid jet, etc.).

Optionally, the actuation unit and the at least one deposition unit are physically separable subsystems of the additive manufacturing system. Optionally, the actuation unit and the at least one deposition unit is solidly connected to each other via a same base (e.g. arranged on the floor) during the printing process. By using a same base, a strong physical connection may be obtained between the subsystems, such that misalignment due to inner or outer force/torque moments or vibration could be reduced or prevented. In this way, the printing quality can be improved, and a high yield can be obtained.

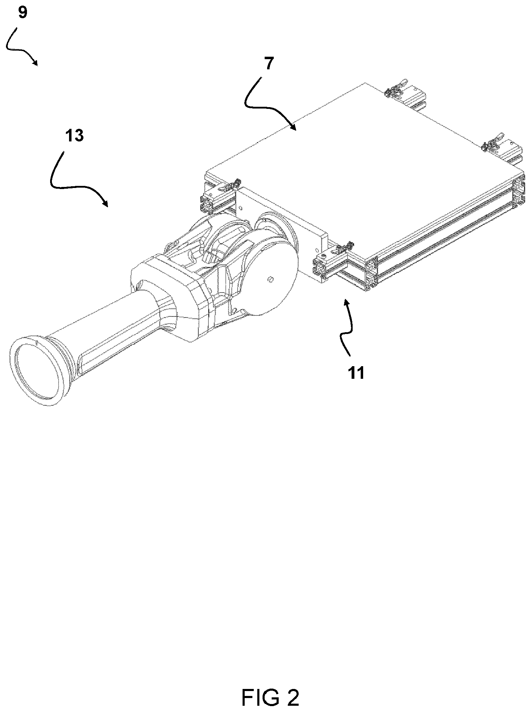

Fig. 2 shows a schematic diagram of a perspective view of an embodiment of an actuation unit 9 and printing surface 7 held by said actuation unit 9. Only a part of the actuation unit 9 is shown. In this example, the actuation unit 9 is a robotic unit comprising a multi-purpose robot arm 13. An exemplary holder 11 is shown. It will be appreciated that various holder arrangements may be used.

Optionally, the multiple printing surfaces are held by a holding unit connectable to the actuation unit (not shown in this example). Multiple 3D structures can be manufactured in an efficient way. The parallel printing can be easily scaled up, especially when a 3D printing technique is employed which has a relatively compact build material dosing arrangement.

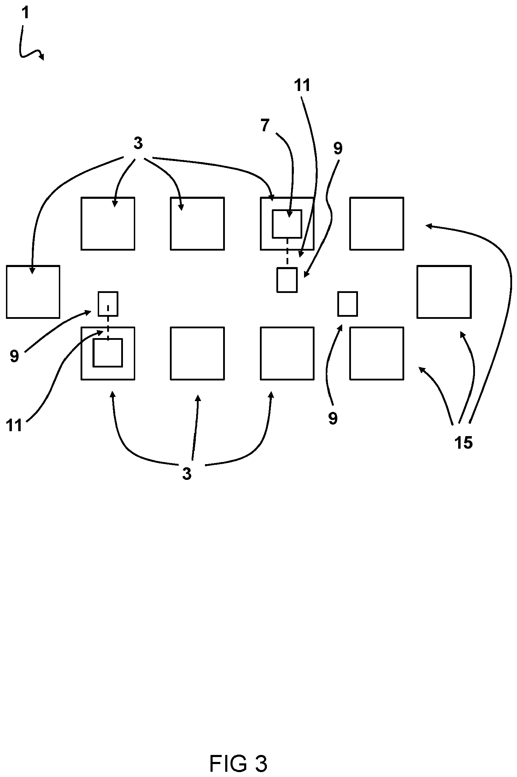

Fig. 3 shows a schematic diagram of a top view of an embodiment of a system 1. The system 1 comprises a plurality of deposition units 3. Additionally, the system 1 comprises a plurality of moveable actuation units 9. The actuation units 9 are configured to hold a printing surface 7 and moving the printing surface 7 during printing at a selected deposition unit 3. The actuation units 9 may be robotic units including one or more robot arms.

In this example, the system 1 further includes other processing units 15. Such processing units 15 may have various functionalities, such as UV curing, conditioning, treatment, drying, chemical processing (e.g. making a printed support material catalytically active), physical processing, etc.

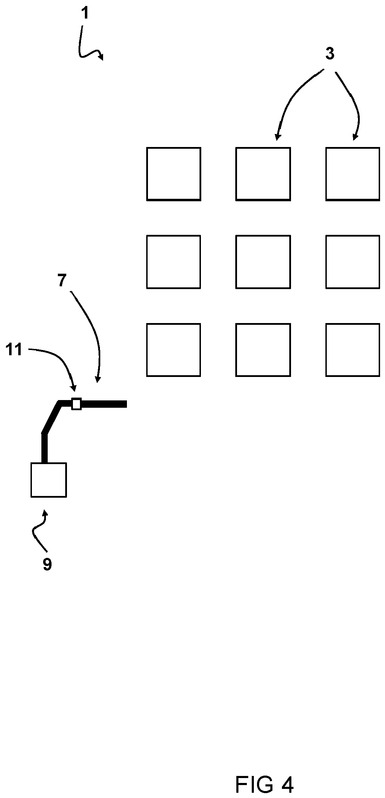

Fig. 4 shows a schematic diagram of a side view of an embodiment of a system 1. The system 1 comprises an actuation unit 9 holding a printing surface 7. A plurality of deposition units 3 are arranged in a matrix formation (two-dimensional array). The actuation member 9 may bring the printing surface 7 in a selected deposition unit and move the print surface 7 during the print process according to the print pattern.

In some examples, the deposition units 3 have different characteristics. For example, the system 1 may comprise a plurality of deposition units 3 with different nozzles. A multi-nozzle printing process may be carried out using the actuation unit 9. The actuation unit 9 may be configured to perform a first part of a printing process at a first deposition unit 3, and subsequently perform a subsequent part of the printing process at a second (different) deposition unit 3. This multi-nozzle printing process may be predetermined in some examples. This provides more capabilities for printing the 3D structure. For example, a particular nozzle at a deposition unit may be used for printing a particular portion of the 3D structure. Instead of arranging all the nozzles at a same deposition unit 3, a variety of deposition units 3 may be provided which are accessible by the actuation unit 9 when needed. A more cost-effective design can be obtained. Additionally or alternatively, a more efficient printing process may be obtained.

Although in the shown example, the multiple deposition units 3 are arranged in a matrix formation, other arrangements are also envisaged. Also, the system 1 may comprise a different number of deposition units 3.

In some examples, different deposition units 3 may be used for printing different materials. The actuation unit 9 can easily switch between the different deposition units 3, and thereby easily print a 3D structure made of different materials. The same actuation unit 9 may be used for movement of the print surface during printing, the movement being associated to the arrangement and/or (geometrical) properties of the structure. Advantageously, the efficiency of the printing process can be significantly improved. In some examples, a same deposition unit 3 can be used during two printing processes carried out using two actuation units, when there is no overlap during use. Furthermore, the system 1 according to the disclosure provides a faster way of printing advanced 3D structures. A multi-material 3D structure can be manufactured in an efficient and effective way. The 3D printed structures may have parts printed using different types of nozzles and/or process conditions at different deposition units for example. Furthermore, the 3D printed structure can easily be further processed after printing, since the actuation unit can easily move the printing surface and/or perform one or more additional tasks such as cleaning, inspection, post-treatment, etc.

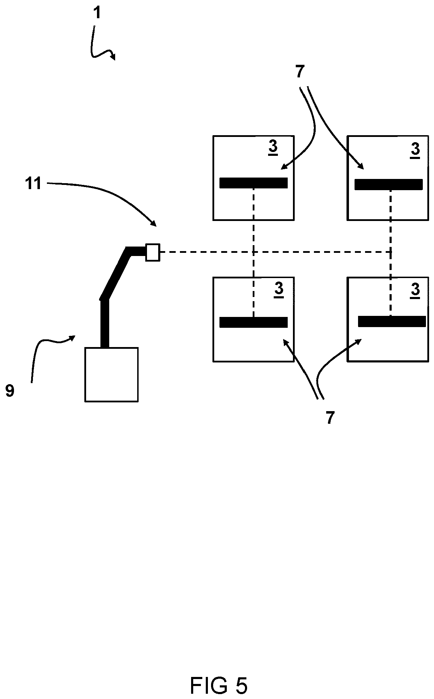

Fig. 5 shows a schematic diagram of a side view of an embodiment of a system 1. The actuation unit 9 is configured to hold multiple printing surfaces 7. In this example, the multiple printing surfaces 7 are held at different deposition units 3 arranged in a 2x2 matrix formation. A synchronized movement of the multiple printing surfaces 7 can be obtained in a robust and efficient way. Furthermore, such design of the system 1 can be easily scaled up for large-scale parallel processing.

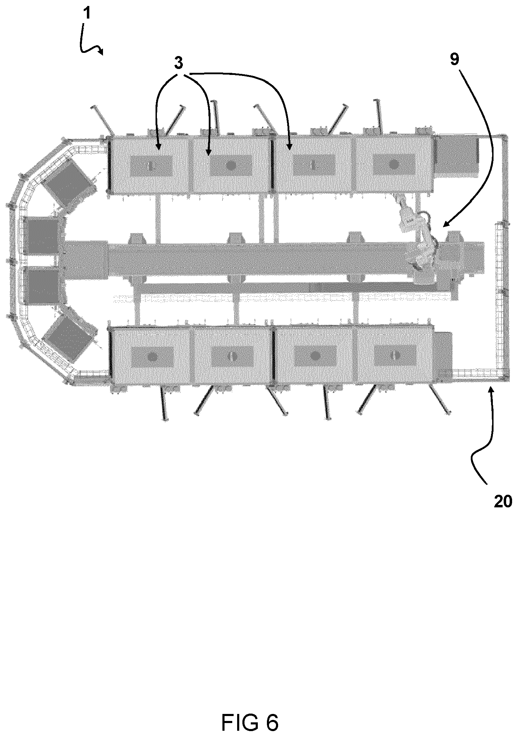

Fig. 6 shows a schematic diagram of a top view of an embodiment of a system 1. The system 1 includes a plurality of printing stations grouped together. Each printing station corresponds to a deposition unit 3.

The system 1 includes a plurality of printing stations 3 for parallel printing of three dimensional structures. The printing stations can be arranged next to each other, each printing station being accessible by the robotic unit 9 (cf. actuation unit).

In the shown example of fig. 6, multiple individual printing stations 3 are integrated in the system 1. The printing stations 3 are separated from each other. Furthermore, the system 1 has an robotic unit 9 with a handling device. The robotic unit 9 is operable in a confined area defined by a system housing 20. The robotic unit 9 can be configured to transport detachable carriers 7 from and to a collection system. In this example, the collection system includes a plurality of racks arranged for holding carriers 7.

In this example, multiple 3D printers are arranged on either side of a rail of the robotic unit 9 on which the handling device can move for accessing the plurality the printing stations 3. In this example, multiple printers are grouped in a housing. It will be appreciated that other arrangements are also envisaged.

The collecting system may be provided for transporting or holding and/or collecting the carriers being removed from the printing stations 3 and/or transporting the carriers to a collecting station or a further processing station for the printed three dimensional structures. The collecting system may also be provided to store empty carriers to have them ready for exchange and transport to a printing station when a filled carrier is positioned in the collecting system. In some examples, the collecting system includes one or more racks with slots in which the carriers 7 can be placed by the robotic unit 9. The robotic unit 9 can be configured to unload empty carriers in the printing stations and loading carriers with the one or more three-dimensional structures printed thereon in the collecting system (e.g. in a rack of the collecting system). Multiple printing stations 3 can be placed in the system housing. Each printing station can have one or more deposition heads with one or more nozzles 11 or printheads. Build material paste (e.g. viscous paste) can be fed to each nozzle 11 or printhead of the deposition or extrusion unit of the printing station from one or more removable build material reservoirs. However, it is also possible that the build material is provided by another material providing unit, such as a mixer. The build material reservoirs may be arranged within the system housing, they may also be arranged externally with respect to the (system) housing. The reservoirs can be removably arranged by means of quick couplings (enabling a quick and easy installation, removal and/or replacement of the reservoirs).

Optionally, a desired atmosphere is maintained in the system housing. Such a controlled atmosphere can also be obtained in optional individual housings of the printing stations. In some alternative examples, an open system is provided. Such an open system may for instance have a cage surrounding working areas (e.g. for operator safety purposes). In some examples, the atmosphere can be regulated in its entirety (e.g. within the system enclosure) such that the actuation unit 9 can easily access the printing stations.

Each printing station can have one or more access openings. In some examples, the printing stations have an open design, allowing the actuation unit 9 to easily move the printing surface 7 inside the printing station. The system 1 may be configured such that when an access panel is opened, operation of the system 1 is paused, halted or stopped. The robotic unit may automatically stop when a door opens.

Printing of the filaments can be done on carriers formed by printing plates or printing tables or printing containers held and moved by the actuation unit 9 during the printing process. The printing surfaces 7 do not have to be installed or fixed within the printing station, instead the printing surfaces 7 can be held by the actuation unit 9 during at least the printing process.

In some examples, all printing stations 3 are accessible by the actuation unit 9 or robotic unit 9. For this purpose the robotic unit 9 can be at least partially surrounded by the printing stations 3 (e.g. arranged centrally). The robotic unit 9 can be arranged to install and place empty carriers, and also removes the carriers with three-dimensional structures printed thereon. The carriers with three-dimensional structures printed thereon can be removed from the printing station and placed on a cart for removal.

In some examples, the reservoir holding build material paste deposited by means of the nozzles of the deposition head are mounted externally, facilitating replacement thereof. The reservoir can be better accessible for replacement, even during printing operations by the printing station. A replacement can be carried out while being protected from moving parts.

In some examples, the actuation unit 9 can directly move the printed 3D structure to a treatment device (e.g. drying, curing, etc.). The treatment device may for example be a UV-curing device, a microwave drying device, a conditioning chamber, etc. Additionally, deformations due to accelerations and vibrations can be better mitigated as the printing surface is already held by an actuation unit which is usable for further manipulating the printing surface to an auxiliary unit (e.g. treatment device, inspection device, etc.).

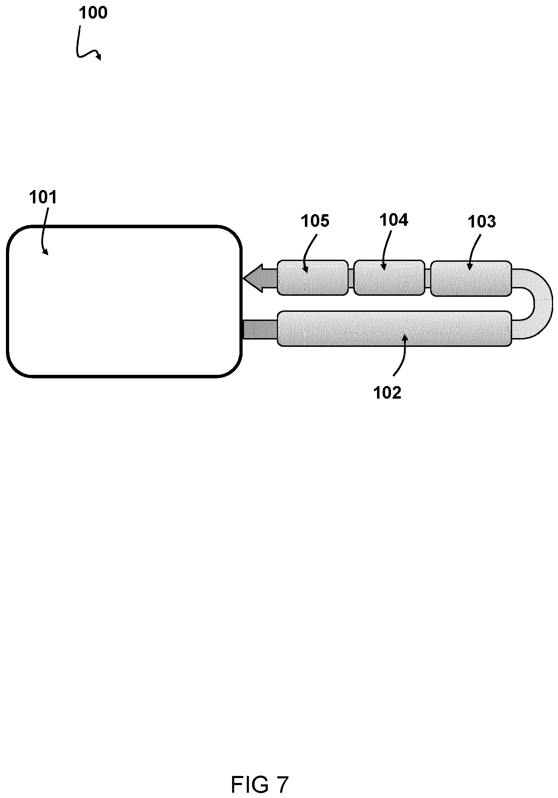

Fig. 7 shows a schematic diagram of a process 100. In a first step 101, a one or more 3D structures are printed using a printing system/platform comprising a robotic unit, at least one deposition unit. The printing platform can also handle further tasks, such as plate handling. In a second step 102, the printed 3D structures may be directly placed on a belt dryer by the actuation unit. As the actuation unit is configured to hold and move the printing surface during the printing process, it can easily efficiently and directly transport the printing surface to the belt dryer. In a third step 103, a quality control and/or inspection can be carried out. In a fourth step 104, the 3D printed structures can be separated. In a fifth step 105, the printing surface 7 can be cleaned. The cleaned printing surface 7 can then be provided back to the printing platform.

The additive manufacturing method may include a closed handling loop for the print surfaces. The closed handling loop may involve providing movement of the print surface during printing, moving the print surface for performing a treatment step (e.g. drying), performing a separation step for separating printed 3D structures, performing a cleaning step for cleaning the structures and/or the print surfaces, etc.

It will be appreciated that the extruded filament may also be known in the art as a strut, fibre/fiber, rod, raster, extrudate, and other terms.

It will be appreciated that the term filament diameter may be understood as a characteristic length of a cross section of the filament being deposited. Other terms may also be used for this feature, such as for example, filament width, fiber diameter, filament size, strut width, etc. The filaments may have various cross section shapes.

It will be appreciated that the layer thickness can be seen as a layer height or slice thickness. It represents a z-increment when 3D printing the three-dimensional structure.

A wide range of materials can be used, with a vast range of properties. Examples are metals, composites, ceramics, polymers, natural materials, gels, etc. Different materials may result in different mechanical properties. Hence, the print path may depend on the specific material used during deposition.

Examples of materials that can be used in the extrusion based additive manufacturing process, include ceramic materials (e.g. alumina, zirconia, silica, silicon carbide, silicon nitride, etc.), composite materials (e.g. polymer ceramic composites), metals (RVS, titanium, copper, aluminum, silver, .etc.) zeolites, metal organic frameworks, carbon, graphene etc. Other materials suitable for extrusion based additive manufacturing are also envisaged, such as for instance polymer based materials.

It will be appreciated that the deposition units may have a deposition head comprising at least one nozzle. The printing surface is held by the actuation unit and moved relative to the deposition head during the printing process, at least in X- or Y- direction, and in Z-direction to permit building a three dimensional object. In some examples, the at least one nozzle of the deposition head may also be moved with respect to the printing surface. In some examples, the position of the deposition head remains fixed in the course of a printing operation.

The deposition head (cf. nozzle head) may include a body on which the plurality of nozzles is arranged. Many variants are possible. It is also possible that a frame is used holding the plurality of nozzles. The nozzles may be separate units or may be integrated within a body of the nozzle head, for instance formed by a plurality of openings in a wall of the body of the nozzle head. According to a different embodiment, the nozzles may be mounted on a frame which extends either in one, two or three dimensions.

Optionally, the plurality of nozzles remain substantially stationary and the print surface is moved. Additionally or alternatively, the plurality of nozzles may be independently moveable with respect to each other. For instance, such movement may be performed in order to obtain a desired nozzle configuration. During printing, however, the printing surface is moved and the nozzles may remain stationary. In an example, the nozzles are connected to the deposition head, and the relative movement between the plurality of nozzles and the printing surface is achieved by using a robot arm for moving the print surface resulting in the relative movement between the print surface and the multiple nozzles for depositing build material in a predetermined arrangement in order to manufacture the 3D structure.

A build material (e.g. paste, suspension, filaments, etc.) can be extruded through the multiple nozzles of the deposition head for three-dimensional filament deposition. The deposited filaments can form a layered network. The layers may for instance be successively printed on top of each other, resulting in a structure formed by a stack of successive layers. The filaments can be spaced apart with respect to each other, according to the spacing of the nozzles, in order to define channels therebetween. By varying the filament orientation in subsequent layers a porous three-dimensional structure can thus be obtained in this way. However, non-porous structures may also be printed. For example, the filaments can however also be positioned adjacent to each other. The filament orientation in subsequent layers may be the same or different.

Advantageously, the productivity of 3D-extrusion can be significantly increased by increasing the amount of nozzles and/or deposition units employed in the system, instead of employing a single nozzle and/or single deposition unit which is fed by a material (e.g. paste) reservoir.

The layerwise deposition of the filaments may include extruding a build material through a (deposition) nozzle to form the filaments while moving the deposition nozzle and the support or print bed relative to each other. Instead of moving the nozzle during printing, the printing surface can be moved by means of a multi-purpose actuation unit in order to obtain relative movement between the printing surface and the nozzle(s) of the deposition unit.

It will be appreciated that the method may include computer implemented steps. All above mentioned steps can be computer implemented steps. Embodiments may comprise computer apparatus, wherein processes performed in computer apparatus. The invention also extends to computer programs, particularly computer programs on or in a carrier, adapted for putting the invention into practice. The program may be in the form of source or object code or in any other form suitable for use in the implementation of the processes according to the invention. The carrier may be any entity or device capable of carrying the program. For example, the carrier may comprise a storage medium, such as a ROM, for example a semiconductor ROM or hard disk. Further, the carrier may be a transmissible carrier such as an electrical or optical signal which may be conveyed via electrical or optical cable or by radio or other means, e.g. via the internet or cloud.

Some embodiments may be implemented, for example, using a machine or tangible computer-readable medium or article which may store an instruction or a set of instructions that, if executed by a machine, may cause the machine to perform a method and/or operations in accordance with the embodiments.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage.

## Claims

1. An additive manufacturing system for manufacturing one or more three-dimensional structures, the system comprising:
at least one deposition unit including one or more nozzles arranged for dispensing a build material through an opening area thereof on a print surface;
a controller configured to operate the system for deposition of filaments of a build material paste on the print surface in an interconnected arrangement in a plurality of stacked layers in order to form the one or more three-dimensional structures; and
an actuation unit arranged to have access to the at least one deposition unit, wherein the actuation unit is configured to hold the print surface; and
wherein the actuation unit is configured to move the print surface at the at least one deposition unit during deposition of the filaments by said deposition unit.

2. The additive manufacturing system according to claim 1, wherein the one or more nozzles of the at least one deposition unit are arranged to remain stationary during the deposition of the filaments.

3. The additive manufacturing system according to claim 1 or 2, wherein the actuation unit and the at least one deposition unit are physically connectable.

4. The additive manufacturing system according to any one of the preceding claims, wherein the system comprises a plurality of deposition units, wherein each of the plurality of the deposition units is accessible by the actuation unit.

5. The additive manufacturing system according to claim 4, wherein the system comprises a first deposition unit and a second deposition unit, wherein the first and second deposition units are different; and wherein the actuation unit is configured to manipulate the print surface so as to perform a first part of a printing process at the first deposition unit, and to manipulate the print surface so as to perform a second part of the printing process at the second deposition unit.

6. The additive manufacturing system according to claim 4 or 5, wherein the plurality of deposition units are arranged around the actuation unit.

7. The additive manufacturing system according to claim 4, 5 or 6, wherein each of the plurality of deposition units have a substantially same distance from the actuation unit.

8. The additive manufacturing system according to any one of the preceding claims 4-7, wherein the actuation unit is movably arranged between the plurality of deposition units.

9. The additive manufacturing system according to any one of the preceding claims, wherein the at least one deposition unit is free of a dedicated movable printing surface arranged in said at least one deposition unit.

10. The additive manufacturing system according to any one of the preceding claims, wherein the print surface is a detachable carrier.

11. The additive manufacturing system according to any one of the preceding claims, wherein the at least one deposition unit includes a reservoir containing build material usable for deposition through the opening area of the one or more nozzles and/or a material providing unit configured to prepare and/or provide said build material, and wherein the reservoir and/or the material providing unit are arranged at the one or more nozzles of said at least one deposition unit.

12. The additive manufacturing system according to any one of the preceding claims, wherein the actuation unit is a robotic unit configured to perform one or more additional processing steps, the additional processing including at least one of: plate handling, inspection, cleaning or repositioning..

13. The additive manufacturing system according to any one of the preceding claims, wherein the system further includes a treatment station, wherein the actuation unit is configured to directly transport the printing surface with printed one or more three-dimensional structures to the treatment station.

14. The additive manufacturing system according to any one of the preceding claims, wherein the actuation unit is configured to hold multiple printing surfaces at a same time for simultaneous printing at multiple different deposition units.

15. A method for manufacturing one or more three-dimensional structures, the method including:
dispensing, by means of at least one deposition unit with one or more nozzles, a build material on a print surface;
operating, by means of a controller, the system for deposition of filaments of a build material paste on the print surface in an interconnected arrangement in a plurality of stacked layers in order to form the one or more three-dimensional structures; and
providing an actuation unit arranged to have access to the at least one deposition unit, the actuation unit holding the print surface, and wherein the actuation unit moves the print surface at the at least one deposition unit during deposition of the filaments by said deposition unit.
